# EUROPÄISCHE PATENTSCHRIFT

(11) **EP 2 830 910 B1**
(45) Veröffentlichungstag und Bekanntmachung des Hinweises auf die Patenterteilung: **02.01.2019**
(21) Anmeldenummer: 13711389.0
(22) Anmeldetag: 22.03.2013
(51) Int. Cl.: B60N 2/68, B60N 2/02, B60N 2/015, B60N 2/52, B60N 2/16

(54) **FAHRZEUGSITZ**
VEHICLE SEAT
SIÈGE DE VÉHICULE

(30) Priorität: 31.03.2012 DE 102012006687
(43) Veröffentlichungstag der Anmeldung: 04.02.2015
(73) Patentinhaber: Adient Luxembourg Holding S.à r.l., 1855 Luxembourg (LU)
(72) Erfinder: ELLERICH, Frank, 67808 Bennhausen (DE); SPIES, Eckhard, 67677 Enkenbach-Alsenborn (DE)
(74) Vertreter: Liedhegener, Ralf
(86) Internationale Anmeldenummer: PCT/EP2013/056014
(87) Internationale Veröffentlichungsnummer: WO 2013/143984

(56) Entgegenhaltungen:
- EP-A2- 0 813 990
- WO-A2-2005/051701
- DE-B3-102005 033 048
- DE-B3-102009 040 461
- DE-U1-202004 018 224
- DE-U1-202011 104 663
- GB-A- 1 560 234
- US-A1- 2010 108 808

## Beschreibung

Die Erfindung betrifft einen Fahrzeugsitz mit einstellbarer Sitztiefe, insbesondere einen Nutzfahrzeugsitz, mit den Merkmalen des Oberbegriffs des Anspruchs 1.

### Stand der Technik

Aus der DE 20 2011 104 663 U1 ist ein gattungsgemäßer Fahrzeugsitz bekannt, dessen Sitztiefe einstellbar ist.

Dazu weist der Fahrzeugsitz ein als Sitzrahmen ausgebildetes erstes Sitzteil und ein als Sitzschale, beziehungsweise als Sitzblech ausgebildetes zweites Sitzteil auf, wobei das Sitzblech relativ zu dem Sitzrahmen in Längsrichtung verschiebbar ist. Durch eine solche Verschiebung der Sitzschale relativ zu dem Sitzrahmen ist die Sitztiefe des Fahrzeugsitzes, also die Länge der in Fahrtrichtung vor der Rückenlehne befindlichen Sitzfläche, einstellbar.

Dabei ist an dem Sitzrahmen ein Gleiter angebracht, welcher mit einem kopfartig ausgebildeten Verbindungsbereich einen Führungsschlitz durchragt, welcher in der Sitzschale vorgesehen ist und in Längsrichtung verläuft.

Zur Befestigung an dem Sitzrahmen weist der Gleiter dazu einen einstückig mit dem Gleiter ausgebildeten Verbindungsbereich auf.

Aus der EP 0813990 A2 ist eine Vorrichtung zur Sitzkissenlängsverstellung von Kraftfahrzeugsitzen bekannt, mit einer Führungskulisse in einem ersten Teil und einem in der Führungskulisse geführten Stützelement, das mit einem zweiten, dazu verschiebbaren Teil fest in Verbindung steht, wobei zwischen dem Rand der Führungskulisse und dem Stützelement ein Gleiter lagert. Das Stützelement besteht aus einer Distanzhülse und einer als Anker dienenden Schraube. Die Schraube ist in das zweite Teil eingeschraubt.
Die WO 2005/051701 A2 offenbart einen Fahrzeugsitz, umfassend ein als Sitzseitenteil ausgeführtes erstes Sitzteil sowie ein als Polsterträger ausgeführtes zweites Sitzteil, welches in Längsrichtung relativ zu dem ersten Sitzteil zur Einstellung der Sitztiefe verschiebbar ist. Ein mit dem ersten Sitzteil verbundener Gleiter durchragt mit einem kopfartig ausgebildeten Verbindungsbereich einen in dem zweiten Sitzteil vorgesehenen Führungsschlitz, wobei zur Befestigung des Gleiters an dem ersten Sitzteil ein als separates Teil ausgeführter und aus Metall bestehender Anker in Form eines Schraubbolzens vorgesehen ist, welcher den Gleiter und das erste Sitzteil durchragt, und welcher den Gleiter mit dem ersten Sitzteil formschlüssig verbindet.

### Aufgabe

Der Erfindung liegt die Aufgabe zu Grunde, einen Fahrzeugsitz der eingangs genannten Art zu verbessern, insbesondere die Festigkeit der Gleiter zu erhöhen und ein Lösen des Ankers aus einer Verankerungsstelle, insbesondere unter schwingender Belastung, zu vermeidet.

### Lösung

Diese Aufgabe wird erfindungsgemäß durch einen Fahrzeugsitz mit den im Anspruch 1 genannten Merkmalen gelöst.

Ein gattungsgemäßer Fahrzeugsitz, insbesondere ein Nutzfahrzeugsitz, umfasst ein erstes Sitzteil sowie ein zweites Sitzteil, welches in Längsrichtung relativ zu dem ersten Sitzteil zur Einstellung der Sitztiefe verschiebbar ist, wobei mindestens ein mit dem ersten Sitzteil verbundener Gleiter vorgesehen ist, welcher mit einem kopfartig ausgebildeten Verbindungsbereich einen in dem zweiten Sitzteil vorgesehenen Führungsschlitz durchragt.

Erfindungsgemäß ist zur Befestigung des Gleiters an dem ersten Sitzteil ein als separates Teil ausgeführter und aus Metall bestehender Anker vorgesehen, welcher den Gleiter und das erste Sitzteil durchragt, und welcher den Gleiter mit dem ersten Sitzteil formschlüssig verbindet. Der Anker ist also nicht einstückig mit dem Gleiter ausgebildet sondern getrennt von diesem als separates Teil. Der Anker weist einen plattenförmigen Haltebereich auf, welcher auf dem Verbindungsbereich des Gleiters aufliegt und an dem Haltebereich ist mindestens eine Kralle vorgesehen, welche mindestens einen Auflagebereich des Gleiters plastisch verformt. Dadurch ist ein sicherer Formschluss des Ankers mit dem Gleiter in Vertikalrichtung gewährleistet. Die Kralle gewährleistet eine verhältnismäßig feste, form- und kraftschlüssige Verbindung zwischen dem Gleiter und dem Anker, indem die Kralle den Auflagebereich plastisch verformt. Insbesondere die Verdrehsicherheit des Ankers relativ zu dem Gleiter um eine in Vertikalrichtung verlaufende Achse ist dadurch erhöht. Weiterhin ist dadurch ein Ausgleich von herstellungsbedingten Toleranzen des Gleiters und des Ankers möglich. Der Anker ist zudem durch einen Formschluss zwischen der Kralle und dem plastisch verformten Auflagebereich gegen ein Lösen aufgrund schwingender Belastung gesichert. Auf eine zusätzliche Sicherung kann verzichtet werden.

Durch die erfindungsgemäße Anordnung eines Ankers ist die Festigkeit des Gleiters insbesondere bei Belastung in Vertikalrichtung deutlich vergrößert. Insbesondere ist die Gefahr eines Lösens des zweiten Sitzteils von dem ersten Sitzteil im Crashfall vermindert. Dadurch, dass der Anker aus Metall besteht, ist die Festigkeit besonders hoch.

Das erste Sitzteil ist dabei vorzugsweise ein mit einem Oberrahmen oder mit einem Scherengestell des Fahrzeugsitzes verbundener Sitzrahmen. Das zweite Sitzteil ist vorzugsweise eine Sitzschale, welche ein Sitzkissen trägt. Zur Sitztiefeneinstellung ist somit die Sitzschale mit dem Sitzkissen relativ zu den Gleitern und auch relativ zu einer Rückenlehne des Fahrzeugsitzes beweglich.

Vorzugsweise ist der Anker dabei einstückig ausgebildet, wodurch die Herstellung und die Montage verhältnismäßig einfach sind.

Es hat sich gezeigt, dass eine Ausführung des Ankers als Zinkdruckgussteil besonders vorteilhaft ist, weil dadurch die Herstellung einfach und kostengünstig ist bei gleichzeitiger hoher Festigkeit.

Der Verbindungsbereich weist vorteilhaft eine Durchgangsöffnung auf, in welche der Anker eingesetzt ist, wobei mehrere, vorzugsweise vier, Auflagebereiche um die Durchgangsöffnung herum angeordnet sind.

Wenn an dem Haltebereich mehrere, vorzugsweise auch vier, Krallen derart angeordnet sind, dass jede der Krallen einen der Auflagebereiche verformt, so ist die Verdrehsicherheit des Ankers relativ zum Gleiter weiter erhöht und der Toleranzausgleich zwischen Anker und Gleiter erfolgt symmetriert.

Vorteilhaft weist der Anker auch einen Befestigungsbereich auf, welcher durch eine Zentralöffnung in dem ersten Sitzteil gesteckt ist und mit dem ersten Sitzteil zusammen wirkt. Dadurch ist auch ein sicherer Formschluss des Ankers mit dem ersten Sitzteil in Vertikalrichtung gewährleistet.

Vorzugsweise ist der Befestigungsbereich dabei quaderförmig ausgestaltet, wodurch eine verhältnismäßig hohe Festigkeit erreichbar ist.

Die Montage des Gleiters an dem ersten Sitzteil ist besonders einfach durchführbar, wenn die formschlüssige Verbindung des Gleiters mit dem ersten Sitzteil durch eine Drehung des Ankers um etwa 90° relativ zu dem ersten Sitzteil herstellbar ist. Vorzugsweise erfolgt die besagte Drehung des Ankers dabei um eine in Vertikalrichtung verlaufende Achse.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:

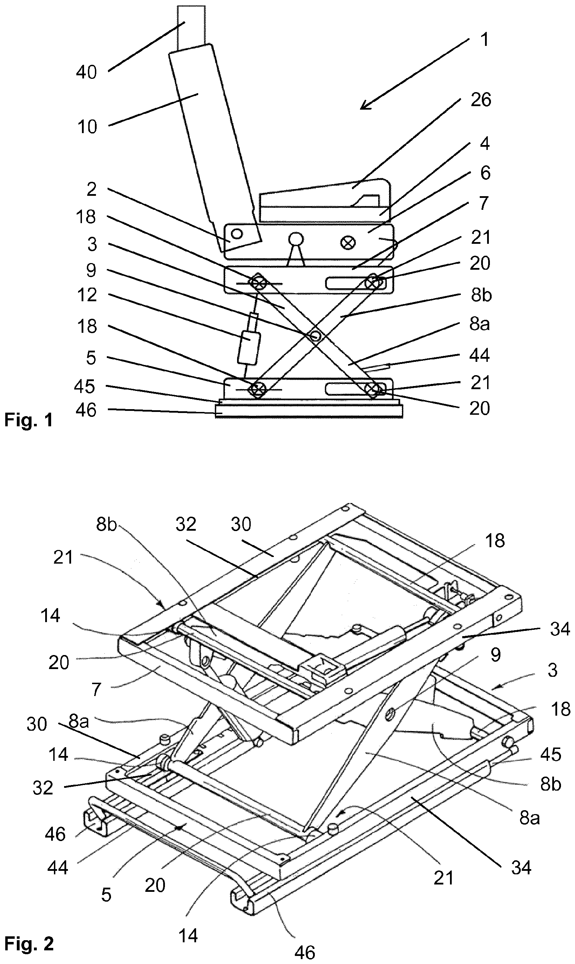

- Fig. 1:: eine schematische Darstellung eines Fahrzeugsitzes,
- Fig. 2:: eine perspektivische Darstellung eines Fahrzeugsitzes ohne Sitzteil und ohne Rückenlehne,

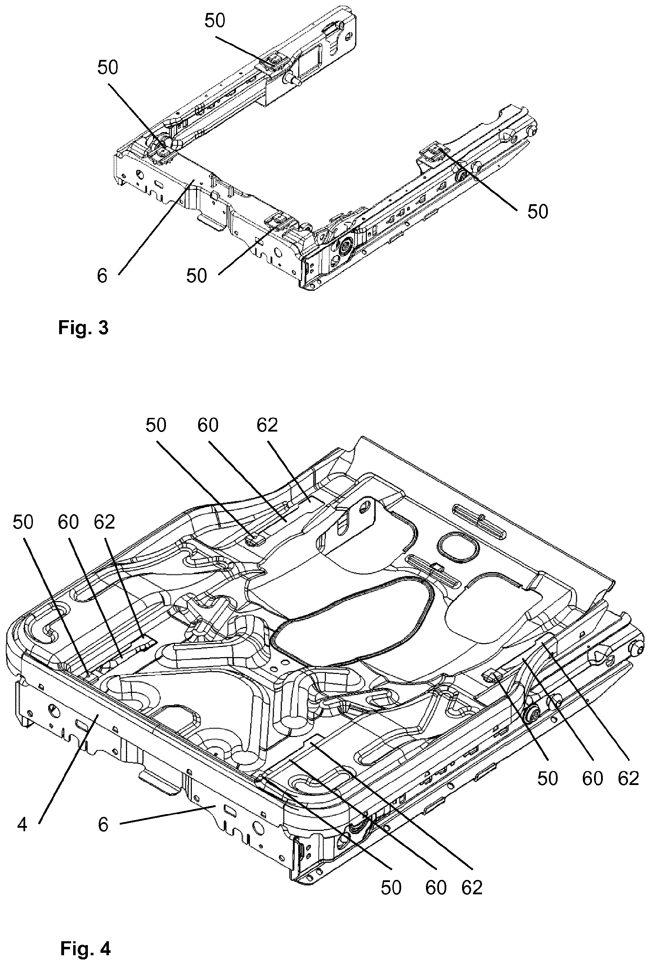

- Fig. 3:: einen Sitzrahmen eines Fahrzeugsitzes,
- Fig. 4:: einen Sitzrahmen mit aufgesetzter Sitzschale,

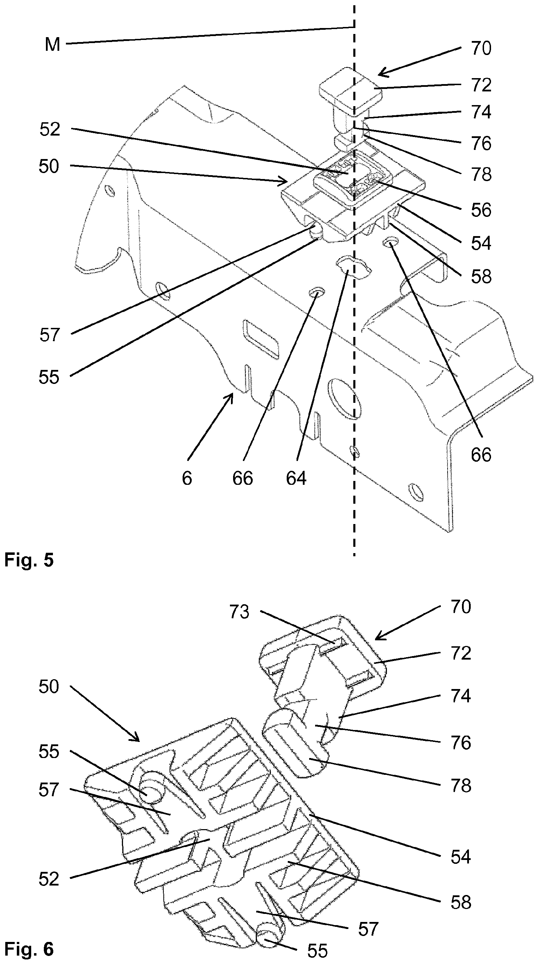

- Fig. 5:: eine Explosionsdarstellung von Sitzrahmen, Gleiter und Anker,
- Fig. 6:: eine Darstellung gemäß Fig. 5 aus einer anderen Perspektive ohne Sitzrahmen,

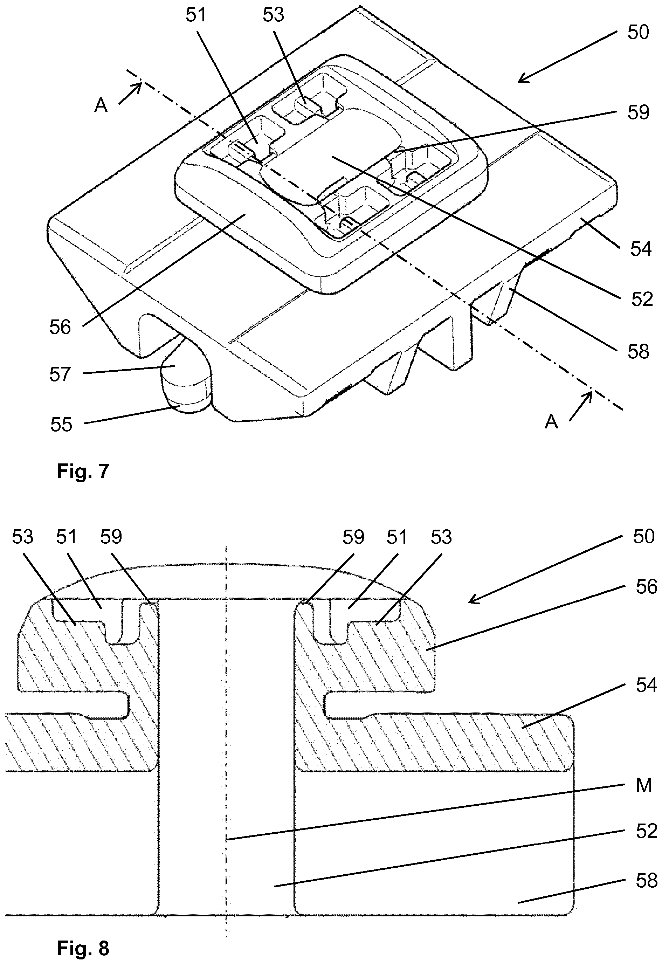

- Fig. 7:: eine vergrößerte Darstellung des Gleiters aus Fig. 5 und
- Fig. 8:: einen Schnitt durch einen Gleiter entlang der Linie A-A aus Fig. 7.

Ein Fahrzeugsitz 1 für ein Nutzfahrzeug weist ein Scherengestell 3 auf, welches einen Unterrahmen 5, einen oberhalb desselben angeordneten Oberrahmen 7 und beidseitig je ein Paar gekreuzter erster Schwingen 8a und zweiter Schwingen 8b umfasst. Ein Querrohr 9 verbindet die beiden Kreuzungspunkte und definiert zugleich eine Scherenachse, um welche die Schwingen 8a und 8b relativ zueinander schwenken können.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die ersten Schwingen 8a sind an ihren hinteren Enden mittels eines Halterrohrs 18 miteinander verbunden und an dem Oberrahmen 7 angelenkt. An ihren vorderen Enden sind die ersten Schwingen 8a mittels eines Lagerrohrs 20 verbunden und beidseitig mittels je einer Lagervorrichtung 21 in dem Unterrahmen 5 in Längsrichtung, welche annähernd der Fahrtrichtung entspricht, beweglich geführt.

Die zweiten Schwingen 8b sind an ihren hinteren Enden mittels eines Halterrohrs 18 miteinander verbunden und an dem Unterrahmen 5 angelenkt. An ihren vorderen Enden sind die zweiten Schwingen 8b ebenfalls mittels eines Lagerrohrs 20 verbunden und beidseitig mittels je einer Lagervorrichtung 21 in dem Oberrahmen 7 in Längsrichtung beweglich geführt.

Das Querrohr 9, die Lagerrohre 20 und die Halterohre 18 erstrecken sich vorliegend in Querrichtung, ebenso wie die Scherenachse. Durch eine Schwenkbewegung der ersten Schwingen 8a relativ zu den zweiten Schwingen 8b um die Scherenachse ändert sich die Höhe des Oberrahmens 7 über dem Unterrahmen 5, im Folgenden kurz als Höhe des Scherengestells 3 bezeichnet. Mittels einer Gasfeder 12 und vorzugsweise einem hier nicht dargestellten Dämpfer wird das Scherengestell 3 ein schwingfähiges System, welches den Sitzkomfort maßgeblich erhöht.

Der Fahrzeugsitz 1 weist ferner einen Sitzrahmen 6 auf, welcher einerseits in seinem hinteren Bereich am Oberrahmen 7 beidseitig angelenkt ist und andererseits in seinem vorderen Bereich mittels eines Neigungseinstellers anhebbar und absenkbar und damit in seiner Neigung relativ zum Scherengestell 3 einstellbar ist.

Der Fahrzeugsitz 1 weist auch eine Rückenlehne 10 auf, welche an dem Sitzrahmen 6 vorliegend neigungseinstellbar angebracht ist. Alternativ ist die Rückenlehne 10 auch an dem Oberrahmen 7 anbringbar. In einem in Vertikalrichtung oberen Bereich der Rückenlehne 10 ist eine Kopfstütze 40 vorgesehen. Die Rückenlehne 10 und der Sitzrahmen 6, welcher eine Sitzschale 4 mit einem Sitzkissen 26 trägt, bilden ein Sitzteil 2. Die Rückenlehne 10 sowie das Sitzkissen 26 sind mit einem Schaumteil gepolstert und mit einem Bezug überzogen.

Das Sitzteil 2 ist, gemeinsam mit dem Scherengestell 3, mittels zweier Schienenpaare verschiebbar, womit der Fahrzeugsitz 1 translatorisch in Längsrichtung, welche annähernd der Fahrtrichtung entspricht, einstellbar ist. Die beiden Schienenpaare sind dabei in Querrichtung zueinander versetzt und parallel zueinander angeordnet. Die beiden Schienenpaare sind im Wesentlichen identisch aufgebaut.

Jedes Schienenpaar umfasst eine erste Sitzschiene 45, welche auch als Oberschiene bezeichnet wird, und eine zweite Sitzschiene 46, welche auch als Unterschiene bezeichnet wird. Die zweite Sitzschiene 46 ist vorliegend fest mit der Struktur des Fahrzeugs verbunden und die erste Sitzschiene 45 ist fest mit dem Unterrahmen 5 des Fahrzeugsitzes 1 verbunden. Alternativ ist es denkbar, die zweite Sitzschiene 46 mittels eines Adapters oder einer Konsole mit der Struktur des Fahrzeugs zu verbinden. Weiterhin ist es denkbar, die erste Sitzschiene 45 mittels eines Adapters mit dem Unterrahmen 5 des Fahrzeugsitzes 1 zu verbinden.

Die erste Sitzschiene 45 ist dabei relativ zu der zweiten Sitzschiene 46 beweglich in dieser geführt. Mittels einer Verriegelungsvorrichtung ist die erste Sitzschiene 45 mit der zweiten Sitzschiene 46 verriegelbar. Eine Entriegelungseinheit, welche einen Entriegelungsbügel 44 umfasst, dient zum Entriegeln der Verriegelungsvorrichtung.

Der Entriegelungsbügel 44 ist in einem in Fahrtrichtung, beziehungsweise in Längsrichtung, vorderen Bereich des Fahrzeugsitzes 1 angeordnet und um eine vorliegend in Querrichtung verlaufende Schwenkachse schwenkbar gelagert. Durch Zug an dem Entriegelungsbügel 44 in Vertikalrichtung nach oben wird dieser um die Schwenkachse geschwenkt, wodurch die Verriegelungsvorrichtung entriegelt wird.

Der Entriegelungshebel 44 und die Schwenkachse sind dabei kinematisch dem Unterrahmen 5 sowie der ersten Sitzschiene 45 zugeordnet. Das bedeutet, bei einer Verschiebung des Sitzteils 2 in Längsrichtung bewegt sich der Entriegelungshebel 44 entsprechend mit, jedoch nicht bei einer Änderung der Höhe des Scherengestells 3, also bei einer Bewegung des Sitzteils 2 in Vertikalrichtung.

Die in Längsrichtung verlaufenden Teile des Oberrahmens 7 sowie des Unterrahmens 5 weisen je ein zum Inneren des Fahrzeugsitzes 1 hin offenes C-Profil auf. Jede Lagervorrichtung 21 weist eine Lastrolle 14 auf, welche um eine in Querrichtung verlaufende Lagerachse drehbar gelagert ist und welche in ein offenes C-Profil des Oberrahmens 7 oder des Unterrahmens 5 ragt.

Das C-Profil des Oberrahmens 7 sowie das C-Profil des Unterrahmens umfassen je einen oberen Schenkel 30 sowie einen unteren Schenkel 32, welcher in Vertikalrichtung unterhalb des oberen Schenkels 30 angeordnet ist. Der obere Schenkel 30 und der untere Schenkel 32 verlaufen parallel zueinander und sind durch einen Basisschenkel 34, welche sich rechtwinklig dazu erstreckt, miteinander verbunden. Somit bilden der obere Schenkel 30, der untere Schenkel 32 und der Basisschenkel 34 im Querschnitt ein C-Profil.

Auf dem Sitzrahmen 6 ist die Sitzschale 4, welche das Sitzkissen 26 trägt, in Längsrichtung beweglich gelagert. Dazu sind mehrere Gleiter 50 vorgesehen, welche fest mit dem Sitzrahmen 6 verbunden sind. Jeder Gleiter 50 durchragt dabei mit einem kopfartig ausgebildeten Verbindungsbereich 56 je einen in der Sitzschale 4 angeordneten, in Längsrichtung verlaufenden Führungsschlitz 60. Vorliegend sind vier gleichartige Gleiter 50 vorgesehen, so dass im Folgenden nur auf einen Gleiter 50 Bezug genommen wird.

Die Anbringung der Sitzschale 4 an dem Gleiter 50 erfolgt auf an sich bekannte Weise, nämlich dadurch, dass der Führungsschlitz 60 in der Sitzschale 4 mit einem erweiterten Einführbereich 62 über den an dem Sitzrahmen 6 befestigten Gleiter 50 positioniert und die Sitzschale 4 relativ zu dem Sitzrahmen 6 in Längsrichtung nach hinten geschoben wird. Dadurch gelangen die Ränder des Führungsschlitzes 60 in Kontakt mit dem hinterschnitten ausgebildeten Verbindungsbereich 56 des Gleiters 50. Damit ergibt sich eine vorliegend lineare Kulissenführung.

Mittels einer nicht dargestellten Einstellvorrichtung ist die Sitzschale 4 in Längsrichtung verschiebbar und in einer gewählten Position fixierbar. Durch Verschiebung der Sitzschale 4 relativ zu dem Sitzrahmen 6 in Längsrichtung ist die Sitztiefe des Fahrzeugsitzes 1, also die Länge der in Fahrtrichtung vor der Rückenlehne 10 befindlichen Sitzfläche, einstellbar.

Der Sitzrahmen 6 weist eine nicht-kreisförmige Zentralöffnung 64 auf, vorliegend gebildet durch die Überlagerung eines kreisförmigen inneren Bereichs und eines rechteckförmigen Bereichs größerer Länge und geringerer Breite als der Durchmesser des kreisförmigen inneren Bereichs, wobei die Schmalseiten des Rechtecks eine nach außen gewölbte Gestalt haben. Die Zentralöffnung 64 weist somit annähernd die Gestalt eines Schlüssellochs für einen Schlüssel mit zwei Bärten auf. Eine Mittelachse M wird durch eine Gerade durch den Kreismittelpunkt, senkrecht zum Sitzrahmen 6 definiert und verläuft annähernd in Vertikalrichtung. Der Kreismittelpunkt fällt mit dem Mittelpunkt des Rechtecks zusammen.

Senkrecht zur Anordnung der Mittellängsachse des Rechtecks, welche vorliegend annähernd in Längsrichtung verläuft, und weiter beabstandet von der Mittelachse M sind zwei leicht langlochförmige Nebenöffnungen 66 vorgesehen, wobei die Längserstreckung der langlochförmigen Nebenöffnungen 66 in radialer Richtung bezogen auf die Mittelachse M ausgerichtet ist. Vorliegend sind die Nebenöffnungen 66 somit annähernd in Querrichtung zu der Zentralöffnung 64 versetzt angeordnet.

Alternativ kann die Mittellängsachse des Rechtecks auch in Querrichtung oder in einem beliebigen Winkel zu der Querrichtung sowie zu der Längsrichtung verlaufen. Ebenso können die Nebenöffnungen 66 auch in Längsrichtung oder in einer beliebigen anderen Richtung zu der Zentralöffnung 64 versetzt angeordnet sein.

Der Gleiter 50 ist vorliegend einstückig aus Kunststoff hergestellt und weist einen zentralen Bereich 54 auf, welcher eine im Wesentlichen quaderförmige Gestalt hat. Auf der dem Sitzrahmen 6 zugewandten Unterseite des zentralen Bereichs 54 quer zur Längserstreckung des Quaders sind eine Mehrzahl von Rippen 58 ausgebildet. Auf der der Sitzschale 4 zugewandten Oberseite des zentralen Bereichs 54 ist der kopfartige Verbindungsbereich 56 ausgebildet.

Ferner sind auf der dem Sitzrahmen 6 zugewandten Unterseite zwei sich in entgegengesetzter Richtung annähernd waagerecht nach außen erstreckende Federarme 57 vorgesehen, welche an ihrem äußeren, freien Ende jeweils einen sich nach unten, von dem zentralen Bereich 54 weg weisenden, leicht kegelstumpfförmig verjüngenden Vorsprung 55 aufweisen.

Der Gleiter 50 weist ferner eine Durchgangsöffnung 52 auf, welche durch den Verbindungsbereich 56 und den zentralen Bereich 54 hindurch verläuft. Die Durchgangsöffnung 52 ist im Querschnitt annähernd rechteckförmig ausgebildet und verläuft koaxial zu der Mittelachse M der Zentralöffnung 64.

Der Verbindungsbereich 56 weist vorliegend vier Ausnehmungen 51 auf, welche durch je einen Auflagebereich 59 von der zentral angeordneten Durchgangsöffnung 52 getrennt sind. Innerhalb jeder Ausnehmung 51 ist ein in Vertikalrichtung erhabener Steg 53 vorgesehen.

Ein vorliegend aus Metall bestehender Anker 70 ist in die Durchgangsöffnung 52 des Gleiters 50 konzentrisch eingesetzt und durchragt diesen in Richtung der Mittelachse M der Zentralöffnung 64. Der Anker 70 ist vorliegend einstückig als Zinkdruckgussteil ausgeführt.

Der Anker 70 weist an seinem dem Sitzrahmen 6 abgewandten Ende einen plattenförmigen Haltebereich 72 auf, welcher quaderförmig ausgebildet ist und auf dem Verbindungsbereich 56 des Gleiters 50 aufliegt. Auf der dem Gleiter 50 zugewandten Seite des Haltebereichs 72 sind vorliegend vier Krallen 73 vorgesehen, welche von der ansonsten planen Oberfläche des Haltebereichs 72 in Richtung auf den Verbindungsbereich 56 des Gleiters 50 hin abstehen. Die Krallen 73 sind vorliegend prismaförmig mit einem Dreieck als Grundfläche ausgestaltet, wobei jeweils eine Begrenzungsfläche an den Haltebereich 72 angrenzt.

Die Krallen 73 des Haltebereichs 72 liegen dabei in Vertikalrichtung den Auflagebereichen 59 des Gleiters 50 benachbart und berühren diese. Die Auflagebereiche 59 sind, wie auch der ganze Gleiter 50, aus einem vergleichsweise weichen Material, vorliegend Kunststoff, gefertigt. Die aus Metall bestehenden Krallen 73 können daher in die Oberflächen der Auflagebereiche 59 eindringen und diese verformen.

In Abhängigkeit von herstellungsbedingten Abweichungen in der Ausdehnung der Auflagebereiche 59 sowie der Krallen 73 in Vertikalrichtung dringen die Krallen 73 mehr oder weniger tief in die Auflagebereiche 59 ein. Dadurch sind herstellungsbedingte Toleranzen des Gleiters 50 und des Ankers 70 ausgleichbar.

Die Krallen 73 dringen derart in die Auflagebereiche 59 ein, dass die Längsachse des Ankers 70 mit der Mittelachse M fluchtet.

In axialer Richtung bezüglich der Mittelachse M an den Haltebereich 72 anschließend besitzt der Anker 70 einen Grundkörper 74, welcher ebenfalls quaderförmig ausgebildet ist. Im Querschnitt senkrecht zu der Mittelachse M entspricht die Form des Grundkörpers 74 annähernd dem Querschnitt der Durchgangsöffnung 52 des Gleiters 50.

In axialer Richtung an den Grundkörper 74 anschließend und dem Haltebereich 72 abgewandt weist der Anker 70 einen Zwischenbereich 76 auf, welcher im Querschnitt annähernd kreisförmig gestaltet ist. Der Durchmesser des Querschnitts des Zwischenbereichs 76 entspricht dabei annähernd dem Durchmesser des kreisförmigen inneren Bereichs der Zentralöffnung 64 in dem Sitzrahmen 6.

Die axiale Länge des Grundkörpers 74 entspricht etwa der axialen Erstreckung des Gleiters 50. Die axiale Länge des Zwischenbereichs 76 entspricht etwa der Dicke des Sitzrahmens 6.

Weiterhin umfasst der Anker einen Befestigungsbereich 78, welcher axial dem Haltebereich 72 abgewandt an den Zwischenbereich 76 anschließt. Der Befestigungsbereich 78 weist eine im Wesentlichen quaderförmige Gestalt auf und ist somit im Querschnitt annähernd rechteckförmig ausgebildet. Die Abmessungen dieses rechteckförmigen Querschnitts entsprechen dabei annähernd den Abmessungen des rechteckförmigen Bereichs der Zentralöffnung 64 in dem Sitzrahmen 6.

Nachfolgend wird die Montage des Gleiters 50 mit Hilfe des Ankers 70 in dem Sitzrahmen 6 des Fahrzeugsitzes 1 beschrieben. Zunächst wird der Anker 70 in axialer Richtung bezüglich der Mittelachse M mit seinem Befestigungsbereich 78 voran derart in die Durchgangsöffnung 52 des Gleiters 50 eingeführt, bis der Haltebereich 72 des Ankers 70 bündig auf dem Verbindungsbereich 56 des Gleiters 50 aufliegt.

Dabei gelangen die Krallen 73 des Ankers 70 in Kontakt mit den Auflagebereichen 59 des Gleiters 50 und graben sich in diese ein, verformen diese also plastisch. Dabei graben sich die Krallen 73 mehr oder weniger tief, je nach Ausdehnung der Auflagebereiche 59 sowie der Krallen 73 in vertikaler Richtung, in die Auflagebereiche 59 ein, wodurch ein Ausgleich von herstellungsbedingten Toleranzen des Ankers 70 und des Gleiters 50 möglich ist.

Auf diese Art entsteht eine form- und kraftschlüssige Verbindung zwischen dem Gleiter 50 und dem Anker 70. Die Krallen 73 liegen dann in Vertikalrichtung jeweils einem Steg 53 des Gleiters 50 gegenüber, bleiben jedoch von diesen beabstandet.

Im Crashfall, wenn eine Verformung des Gleiters 50 stattfindet, können ein oder mehrere Stege 53 in Anlage an die jeweils gegenüberliegende Kralle 73 des Ankers 70 gelangen.

Anschließend wird der Befestigungsbereich 78 des Ankers 70 in axialer Richtung durch die Zentralöffnung 64 des Sitzrahmens 6 gesteckt. Dabei ist der Anker 70 derart ausgerichtet, dass der Befestigungsbereich 78 durch den rechteckförmigen Bereich der Zentralöffnung 64 passt. Der Gleiter 50 ist dabei derart orientiert, dass die Vorsprünge 55 bezüglich der Mittelachse M um etwa 90° zu den Nebenöffnungen 66 versetzt liegen. Der Befestigungsbereich 78 des Ankers 70 befindet sich somit also auf der dem Gleiter 50 abgewandten Seite des Sitzrahmens 6.

Danach wird der Anker 70 zusammen mit dem Gleiter 50 um 90° um die Mittelachse M gedreht. Dadurch gelangen die Vorsprünge 55 des Gleiters 50 über die Nebenöffnungen 66 und werden von den Federarmen 57 in diese hinein gedrückt, wo sie formschlüssig einrasten. Ferner gelangt der Befestigungsbereich 78 des Ankers 70 teilweise unter den Sitzrahmen 6 und sichert damit den Anker 70 und den Gleiter 50 in axialer Richtung.

Somit ist der Gleiter 50 formschlüssig mit dem Sitzrahmen 6 verbunden.

Gemäß einer alternativen Ausführung ist der Anker 70 als Niet, vorzugsweise als Stahl-Blindniet, ausgeführt, welcher den Gleiter 50 mit dem Sitzrahmen 6 verbindet.

### Bezugszeichenliste

- 1: Fahrzeugsitz
- 2: Sitzteil
- 3: Scherengestell
- 4: Sitzschale
- 5: Unterrahmen
- 6: Sitzrahmen
- 7: Oberrahmen
- 8a: erste Schwinge
- 8b: zweite Schwinge
- 9: Querrohr
- 10: Rückenlehne
- 12: Gasfeder
- 14: Lastrolle
- 18: Halterohr
- 20: Lagerrohr
- 21: Lagervorrichtung
- 26: Sitzkissen
- 30: oberer Schenkel
- 32: unterer Schenkel
- 34: Basisschenkel
- 40: Kopfstütze
- 44: Entriegelungshebel
- 45: erste Sitzschiene
- 46: zweite Sitzschiene
- 50: Gleiter
- 51: Ausnehmung
- 52: Durchgangsöffnung
- 53: Steg
- 54: zentraler Bereich
- 55: Vorsprung
- 56: Verbindungsbereich
- 57: Federarme
- 58: Rippen
- 59: Auflagebereich
- 60: Führungsschlitz
- 62: Einführbereich
- 64: Zentralöffnung
- 66: Nebenöffnung
- 70: Anker
- 72: Haltebereich
- 73: Kralle
- 74: Grundkörper
- 76: Zwischenbereich
- 78: Befestigungsbereich
- M: Mittelachse

## Patentansprüche

1. Fahrzeugsitz (1), insbesondere Nutzfahrzeugsitz, umfassend ein erstes Sitzteil sowie ein zweites Sitzteil, welches in Längsrichtung relativ zu dem ersten Sitzteil zur Einstellung der Sitztiefe verschiebbar ist, wobei mindestens ein mit dem ersten Sitzteil verbundener Gleiter (50) vorgesehen ist, welcher mit einem kopfartig ausgebildeten Verbindungsbereich (56) einen in dem zweiten Sitzteil vorgesehenen Führungsschlitz (60) durchragt, wobei zur Befestigung des Gleiters (50) an dem ersten Sitzteil ein als separates Teil ausgeführter und aus Metall bestehender Anker (70) vorgesehen ist, welcher den Gleiter (50) und das erste Sitzteil durchragt, und welcher den Gleiter (50) mit dem ersten Sitzteil formschlüssig verbindet, wobei der Anker (70) einen plattenförmigen Haltebereich (72) aufweist, welcher auf dem Verbindungsbereich (56) des Gleiters (50) aufliegt, wobei an dem Haltebereich (72) mindestens eine Kralle (73) vorgesehen ist, welche mindestens einen Auflagebereich (59) des Gleiters (50) plastisch verformt.

2. Fahrzeugsitz (1) nach Anspruch 1, **dadurch gekennzeichnet, dass** das erste Sitzteil ein mit einem Oberrahmen (7) oder mit einem Scherengestell (3) des Fahrzeugsitzes (1) verbundener Sitzrahmen (6) ist.

3. Fahrzeugsitz (1) nach einem der vorstehenden Ansprüche, **dadurch gekennzeichnet, dass** das zweite Sitzteil eine Sitzschale (4) ist, welche ein Sitzkissen (26) trägt.

4. Fahrzeugsitz (1) nach einem der vorstehenden Ansprüche, **dadurch gekennzeichnet, dass** der Anker (70) einstückig ausgebildet ist.

5. Fahrzeugsitz (1) nach einem der vorstehenden Ansprüche, **dadurch gekennzeichnet, dass** der Gleiter (50) aus Kunststoff besteht.

6. Fahrzeugsitz (1) nach einem der vorstehenden Ansprüche, **dadurch gekennzeichnet, dass** der Anker (70) als Zinkdruckgussteil ausgeführt ist.

7. Fahrzeugsitz (1) nach einem der vorstehenden Ansprüche, **dadurch gekennzeichnet, dass** der Verbindungsbereich (56) eine Durchgangsöffnung (52) aufweist, in welche der Anker (70) eingesetzt ist, wobei mehrere, vorzugsweise vier, Auflagebereiche (59) um die Durchgangsöffnung (52) herum angeordnet sind.

8. Fahrzeugsitz (1) nach Anspruch 7, **dadurch gekennzeichnet, dass** an dem Haltebereich (72) mehrere, vorzugsweise vier, Krallen (73) derart angeordnet sind, dass jede der Krallen (73) einen der Auflagebereiche (59) verformt.

9. Fahrzeugsitz (1) nach einem der vorstehenden Ansprüche, **dadurch gekennzeichnet, dass** der Anker (70) einen Befestigungsbereich (78) aufweist, welcher durch eine Zentralöffnung (64) in dem ersten Sitzteil gesteckt ist und mit dem ersten Sitzteil zusammen wirkt.

10. Fahrzeugsitz (1) nach Anspruch 9, **dadurch gekennzeichnet, dass** der Befestigungsbereich (78) quaderförmig ausgestaltet ist.

11. Fahrzeugsitz (1) nach einem der vorstehenden Ansprüche, **dadurch gekennzeichnet, dass** die formschlüssige Verbindung des Gleiters (50) mit dem ersten Sitzteil durch eine Drehung des Ankers (70) um etwa 90° relativ zu dem ersten Sitzteil herstellbar ist.

## Claims

1. Vehicle seat (1), in particular a utility vehicle seat, comprising a first seat part and a second seat part which is displaceable in the longitudinal direction relative to the first seat part in order to adjust the seat depth, wherein at least one slider (50) is provided, which is connected to the first seat part and protrudes with a head-shaped connection area (56) through a guide slot (60) provided in the second seat part, wherein, in order to secure the slider (50) on the first seat part, an anchoring element (70), which is designed as a separate part and is made of metal, is provided, which anchoring element (70) protrudes through the slider (50) and through the first seat part and establishes a form-fit connection of the slider (50) to the first seat part, wherein the anchoring element (70) has a plate-shaped holding area (72), which bears on the connection area (56) of the slider (50), wherein at least one claw (73) is provided on the holding area (72), which claw (73) plastically deforms at least one support area (59) of the slider (50).

2. Vehicle seat (1) according to Claim 1, **characterized in that** the first seat part is a seat frame (6) connected to an upper frame (7) or to a scissors-type stand (3) of the vehicle seat (1).

3. Vehicle seat (1) according to one of the preceding claims, **characterized in that** the second seat part is a seat shell (4), which carries a seat cushion (26).

4. Vehicle seat (1) according to one of the preceding claims, **characterized in that** the anchoring element (70) is designed in one piece.

5. Vehicle seat (1) according to one of the preceding claims, **characterized in that** the slider (50) is made of plastic.

6. Vehicle seat (1) according to one of the preceding claims, **characterized in that** the anchoring element (70) is designed as a zinc die-cast part.

7. Vehicle seat (1) according to one of the preceding claims, **characterized in that** the connection area (56) has a through-opening (52) into which the anchoring element (70) is fitted, wherein several support areas (59), preferably four support areas (59), are arranged around the through-opening (52).

8. Vehicle seat (1) according to Claim 7, **characterized in that** several claws (73), preferably four claws (73), are arranged on the holding area (72) in such a way that each of the claws (73) deforms one of the support areas (59).

9. Vehicle seat (1) according to one of the preceding claims, **characterized in that** the anchoring element (70) has a securing area (78), which is inserted through a central opening (64) in the first seat part and interacts with the first seat part.

10. Vehicle seat (1) according to Claim 9, **characterized in that** the securing area (78) is designed with a cuboid shape.

11. Vehicle seat (1) according to one of the preceding claims, **characterized in that** the form-fit connection of the slider (50) to the first seat part can be established by rotating the anchoring element (70) through approximately 90° relative to the first seat part.

## Revendications

1. Siège de véhicule (1), en particulier siège de véhicule utilitaire, comprenant une première partie de siège ainsi qu'une deuxième partie de siège qui peut être déplacée dans la direction longitudinale par rapport à la première partie de siège pour l'ajustement de la profondeur du siège, au moins un coulisseau (50) connecté à la première partie de siège étant prévu, lequel traverse une fente de guidage (60) prévu dans la deuxième partie de siège avec une région de liaison (56) réalisée en forme de tête, un ancrage (70) réalisé sous forme de pièce séparée et constitué de métal étant prévu pour la fixation du coulisseau (50) à la première partie de siège, lequel traverse le coulisseau (50) et la première partie de siège et lequel relie le coulisseau (50) à la première partie de siège par engagement par correspondance de formes et l'ancrage (70) présentant une région de retenue en forme de plaque (72) qui repose sur la région de liaison (56) du coulisseau (50) et au moins une griffe (73) est prévue sur la région de retenue (72), laquelle déforme plastiquement au moins une région d'appui (59) du coulisseau (50).

2. Siège de véhicule (1) selon la revendication 1, **caractérisé en ce que** la première partie de siège est un cadre de siège (6) connecté à un cadre supérieur (7) ou à un bâti en ciseaux (3) du siège de véhicule (1).

3. Siège de véhicule (1) selon l'une quelconque des revendications précédentes, **caractérisé en ce que** la deuxième partie de siège est une coque de siège (4) qui porte un coussin de siège (26).

4. Siège de véhicule (1) selon l'une quelconque des revendications précédentes, **caractérisé en ce que** l'ancrage (70) est réalisé d'une seule pièce.

5. Siège de véhicule (1) selon l'une quelconque des revendications précédentes, **caractérisé en ce que** le coulisseau (50) se compose de plastique.

6. Siège de véhicule (1) selon l'une quelconque des revendications précédentes, **caractérisé en ce que** l'ancrage (70) est réalisé sous forme de pièce en zinc moulée sous pression.

7. Siège de véhicule (1) selon l'une quelconque des revendications précédentes, **caractérisé en ce que** la région de liaison (56) présente une ouverture de passage (52) dans laquelle est inséré l'ancrage (70), plusieurs régions d'appui (59), de préférence quatre, étant disposées tout autour de l'ouverture de passage (52).

8. Siège de véhicule (1) selon la revendication 7, **caractérisé en ce que** plusieurs griffes (73), de préférence quatre, sont disposées sur la région de retenue (72) de telle sorte que chacune des griffes (73) déforme l'une des régions d'appui (59).

9. Siège de véhicule (1) selon l'une quelconque des revendications précédentes, **caractérisé en ce que** l'ancrage (70) présente une région de fixation (78) qui est enfichée à travers une ouverture centrale (64) la première partie de siège et qui coopère avec la première partie de siège.

10. Siège de véhicule (1) selon la revendication 9, **caractérisé en ce que** la région de fixation (78) est configurée sous forme parallélépipédique.

11. Siège de véhicule (1) selon l'une quelconque des revendications précédentes, **caractérisé en ce que** la liaison par engagement par correspondance de formes du coulisseau (50) avec la première partie de siège peut être établie par une rotation de l'ancrage (70) d'environ 90° par rapport à la première partie de siège.
